# NEUE EUROPÄISCHE PATENTSCHRIFT

(11) **EP 2 368 696 B2**
(45) Veröffentlichungstag und Bekanntmachung des Hinweises auf die Entscheidung über den Einspruch: **18.07.2018**
(45) Hinweis auf die Patenterteilung: 16.05.2012
(21) Anmeldenummer: 10157842.5
(22) Anmeldetag: 25.03.2010
(51) Int. Cl.: B29C 64/153, B29C 64/357

(54) **Auffrischoptimiertes PA 12-Pulver zur Verwendung in einem generativen Schichtbauverfahren**
Refreshening-optimised PA 12 powder for use in a generative layer construction procedure
Poudre de PA 12 optimisée par enrichissement destinée à l'utilisation dans un procédé de construction à couche génératif

(43) Veröffentlichungstag der Anmeldung: 28.09.2011
(73) Patentinhaber: EOS GmbH Electro Optical Systems, 82152 Krailling (DE)
(72) Erfinder: Paternoster, Stefan, 82346 Andechs (DE)
(74) Vertreter: Prüfer & Partner mbB Patentanwälte · Rechtsanwälte

(56) Entgegenhaltungen:
- EP-A1- 1 642 923
- DE-A1- 10 330 590

## Beschreibung

Die Erfindung bezieht sich auf ein Verfahren zur schichtweisen Herstellung eines dreidimensionalen Objekts mittels Einwirkens von elektromagnetischer Strahlung oder Partikelstrahlung auf ein pulverförmiges Aufbaumaterial, wobei als Aufbaumaterial ein Polyamid 12-Pulver verwendet wird. Die Erfindung bezieht sich ferner auf ein in diesem Verfahren zu verwendendes PA 12-Pulver sowie auf ein mittels des Verfahrens hergestelltes dreidimensionales Objekt.

Bei den generativen Fertigungsverfahren, bei denen ein dreidimensionales Objekt mittels Sinterns oder Schmelzens eines pulverförmigen Aufbaumaterials schichtweise hergestellt wird, nehmen Kunststoffpulver als Ausgangsmaterialien eine wichtige Stellung ein, da sie den Verfahrensablauf aufgrund ihrer niedrigen Schmelzpunkte und geringen Wärmeleitfähigkeiten begünstigen. Üblicherweise wird die für den Sinter- oder Schmelzvorgang erforderliche Energie mittels eines Lasers eingebracht, teilweise werden aber auch Elektronen- oder Infrarotstrahlen für diesen Zweck eingesetzt.

DE 197 47 309 A1 beschreibt ein Polyamid 12-Pulver des Standes der Technik, das sich speziell für selektives Lasersintern eignet.

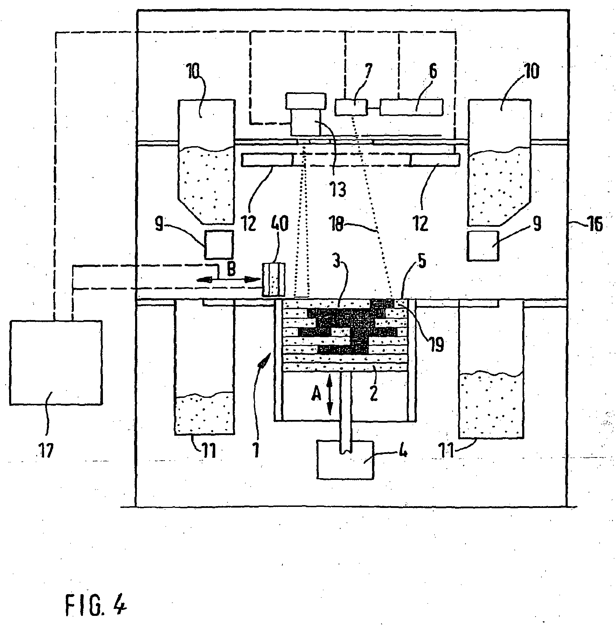

DE 10 2006 053 121 B3 beschreibt eine Lasersintervorrichtung als Vorrichtung zur Herstellung eines dreidimensionalen Objektes, die in Fig. 4 gezeigt ist. Der Bauvorgang findet in einem nach oben offenen Behälter 1 statt. In dem Behälter ist ein Träger 2 zum Tragen des zu bildenden dreidimensionalen Objekts 3 vorgesehen. Der Träger 2 ist mittels eines Antriebs 4 in dem Behälter 1 in vertikaler Richtung A auf und ab bewegbar. Der obere Rand des Behälters 1 definiert ein Baufeld 5. Oberhalb des Baufelds 5 ist eine ,Bestrahlungseinrichtung 6 in Form eines Lasers angeordnet, die einen gerichteten Laserstrahl 18 abgibt, der über eine Ablenkvorrichtung 7 auf das Baufeld 5 gelenkt wird. Ferner ist ein Beschichter 40 zum Aufbringen einer Schicht eines zu verfestigenden pulverförmigen Materials auf die Oberfläche des Trägers 2 oder eine zuletzt verfestigte Schicht vorgesehen. Der Beschichter 40 ist mittels eines durch die Pfeile B schematisch angedeuteten Antriebs über dem Baufeld 5 hin und her bewegbar. Durch zwei Dosierer 9 links und rechts vom Baufeld wird der Beschichter aus zwei Pulvervorratsbehältern 10 gespeist. Ferner sind links und rechts vom Baufeld zwei Überlaufbehälter 11 vorgesehen, die das beim Beschichten anfallende überschüssige Pulver aufnehmen können.

Über dem Baufeld 5 ist eine Heizeinrichtung 12 angeordnet zum Heizen des Pulverbetts 19 und insbesondere zum Vorwärmen einer aufgetragenen aber noch nicht gesinterten (verfestigten) Pulverschicht auf eine geeignete Bautemperatur. Die Heizeinrichtung 12 ist beispielsweise in Form eines oder mehrerer Heizstrahler (beispielsweise Infrarotstrahler) ausgebildet. Sie ist so oberhalb des Baufelds 5 angeordnet, daß die aufgetragene Pulverschicht gleichmäßig erwärmt werden kann.

In einem Abstand oberhalb des Baufelds 5 ist eine Temperaturmesseinrichtung 13, beispielsweise ein Pyrometer oder eine IR-Kamera, vorgesehen, durch welche die Temperatur der zuletzt aufgetragenen Pulverschicht gemessen werden kann.

Eine Prozeßkammer 16 schließt das Baufeld von der Umgebung ab, so dass es möglich ist, einen Bauvorgang unter Abschluß von Luft durchzuführen und eine Oxidation des Pulvers zu verhindern.

Zum Steuern und/oder Regeln der Bewegung B des Beschichters 40 dient eine Steuer- und/oder Regeleinrichtung 17. Diese steuert/regelt ebenfalls die Bewegung A des Trägers 2, die Leistung der Heizeinrichtung 12, die Leistung der Bestrahlungseinrichtung 6 und die Ablenkung durch die Ablenkeinrichtung 7. Hierzu ist die Steuer-/Regeleinrichtung 17 mit dem Antrieb des Beschichters 40, dem Antrieb 4, der Heizeinrichtung 12, der Temperaturmesseinrichtung 13, der Ablenkeinrichtung 7 sowie der Bestrahlungseinrichtung 6 verbunden.

Im folgenden wird der Betrieb solch einer Lasersintervorrichtung beschrieben:

Zunächst befindet sich der Beschichter 40 unterhalb des Dosierers 9 und wird aus dem Vorratsbehälter 10 mit der Menge an pulverförmigem Material für eine Schicht befüllt.

Danach wird durch Verfahren des Beschichters 40 parallel zur Oberfläche des Baufelds 5 eine Pulverschicht auf den Träger 2 oder auf eine zuvor verfestigte Schicht aufgebracht. Dabei fließt pulverförmiges Material aus dem Beschichter nach. Nach dem Aufbringen einer Schicht des pulverförmigen Materials erfolgt die Verfestigung an den Stellen der Schicht, die dem Querschnitt des Objekts entsprechen, indem die Schicht mit dem Laserstrahl 18 belichtet wird. Nach dem Verfestigen einer Schicht wird der Träger 2 um eine der Schichtdicke entsprechende Strecke abgesenkt und die zuvor beschriebenen Schritte werden wiederholt bis die Herstellung des dreidimensionalen Objekts 3 abgeschlossen ist.

Während eines Bauvorgangs ruht das entstehende Objekt innerhalb des es umgebenden Pulverbetts aus unverfestigtem Pulver und wird durch dieses abgestützt. Dadurch bedingt liegen nach Abschluss eines Bauvorgangs in der Regel erhebliche Mengen an unverfestigtem Pulver vor, so dass es wünschenswert ist, dieses so genannte Altpulver soweit als möglich für einen weiteren Bauvorgang zu verwenden. Da das unverbrauchte Pulver während eines Bauvorgangs über lange Zeiträume hinweg hohen Temperaturen knapp unterhalb seines Schmelzpunkts ausgesetzt ist, gibt es jedoch das Problem, dass durch diese Umweltbedingungen das Pulver einem Alterungsprozess unterliegen kann, bei dem es thermisch und/oder thermooxidativ geschädigt wird. Dies führt dazu, dass für weitere Bauvorgänge das Altpulver mit Neupulver vermischt werden muss, wobei der Anteil des Neupulvers in der Regel bei mindestens 50% liegen muss. Der prozentuale Anteil des Neupulvers wird auch oft als "Auffrischrate" bezeichnet.

DE 10330590 A1 offenbart eine Pulvermischung gemäss dem Obergriff des Anspruchs 1.

DE 103 30 590 A1 kommt zu dem Schluss, dass dieser Alterungsprozess durch eine Nachkondensation erklärt werden kann:

Unter den Umweltbedingungen während eines Bauvorgangs reagieren auch im unverbrauchten Pulver die freien Carboxyl- und AminoEndgruppen im Polyamid 12 miteinander unter Wasserabspaltung (die eigentliche Nachkondensation). Zusätzlich wurde in DE 103 30 590 A1 ein überstöchiometrischer Verlust an Aminoendgruppen gegenüber den Carboxyl-Endgruppen beobachtet. Als Ursache hierfür wurde eine thermooxidative Abspaltung der Aminogruppen mit nachfolgender Vernetzung gesehen. Bei den gealterten Pulvern zeigte sich in jedem Fall eine deutliche Erhöhung der Lösungsviskosität.

Zur Erhöhung des wiederverwendbaren Anteils an Altpulver wurde in DE 103 30 590 A1 vorgeschlagen, für den Bauvorgang stets ein Polyamid zu verwenden, bei dem ein Verhältnis von Carboxyl-endgruppen zu Aminoendgruppen von mindestens 2:1 vorliegt und der Aminoendgruppengehalt unter 40 mmol/kg liegt (geregeltes Polyamid), im Gegensatz zu einem sogenannten ungeregelten Polyamid, wie es beispielsweise in DE 197 08 946 beschrieben ist. Das gewünschte Endgruppenverhältnis wird dabei mit einer Carbonsäure als Regler erhalten. In DE 103 30 590 A1 wurde dabei auch für Pulvermischungen von geregeltem und ungeregeltem PA 12 nach Alterung des Pulvers ein nur geringer Anstieg der Lösungsviskosität beobachtet. Ohne nähere Angabe von Gründen wurde ein bevorzugter Bereich von 10 bis 90% für den Anteil an geregeltem Polyamid angegeben und ein besonders bevorzugter Bereich von 25 bis 75%.

Für die herzustellenden Objekte ist es wichtig, dass diese vorteilhafte mechanische Eigenschaften, insbesondere eine hohe Reißdehnung, zeigen. In DE 103 30 590 A1 wird diesbezüglich auf eine Verbesserung der mechanischen Eigenschaften des produzierten Bauteils infolge der Verwendung von geregeltem Polyamid 12 hingewiesen. Neben den mechanischen Eigenschaften der zu fertigenden Objekt muss man beim Lasersintern von Kunststoffpulvern aber noch weitere Randbedingungen beachten. Zum einen ist auf einen möglichst geringen Bauteilverzug zu achten, zum anderen ist auf eine möglichst hohe Qualität der äußeren Oberflächen des Objekts zu achten.

Der Bauteilverzug ist ein bekanntes Problem, dass seine Ursache in der Schrumpfung von teilkristallinen Kunststoffen beim Abkühlvorgang hat. Die große Volumenänderung während des Erstarrens führt zu einem Verbiegen der Enden des Objekts nach oben. Eine unbefriedigende Oberflächenbeschaffenheit der äußeren Bauteilwände äußert sich in sogenannten Einfallstellen, die auch "sink marks" oder "orange peel" genannt werden und die insbesondere beim Wiederverwenden von Altpulver beobachtet werden.

EP 1642 923 A1 beschreibt ein Pulver auf Basis von difunktional geregeltem Polyamid oder Coplyamid.

Die Aufgabe der vorliegenden Erfindung ist es daher, ein Verfahren zum schichtweisen Herstellen eines dreidimensionalen Objekts aus einem pulverförmigen Baumaterial, ein solches Baumaterial und mittels des Verfahrens hergestellte Objekte bereitzustellen, bei denen die fertigen Objekte nicht nur gute mechanische Eigenschaften, sondern ebenfalls einen geringen Verzug und eine hohe Oberflächenqualität aufweisen.

Die Aufgabe wird gelöst durch eine Pulvermischung nach Anspruch 1, ein Verfahren zum Herstellen eines dreidimensionalen Objekts nach Anspruch 12, die Verwendung einer Pulvermischung nach Anspruch 14 und ein dreidimensionales Objekt nach Anspruch 15.

Weiterbildungen der Erfindung sind in den Unteransprüchen angegeben.

Wie bereits eingangs erwähnt wurde, wird in DE 103 30 590 A1 empfohlen, in einem Lasersinterverfahren geregeltes PA 12-Pulver als Baumaterial zu verwenden. Da bei geregeltem Polyamid 12 eine thermische Belastung während eines Bauvorgangs nicht zu einer merklichen Erhöhung der Lösungsviskosität und damit einhergehend einem Molmassenaufbau führt, sollte man denken, dass am zweckmäßigsten ein möglichst hoher Anteil des geregelten Polyamid 12 an der Pulvermischung verwendet werden sollte, um ein Pulver zu erhalten, das oft wiederverwendbar ist.

Überraschenderweise wurde nun aber gemäß der vorliegenden Erfindung gefunden, dass ein hoher Prozentsatz an geregeltem Polyamid 12-Pulver sich nicht zwangsläufig für die Herstellung von verzugsarmen Objekten mit zufriedenstellenden mechanischen Eigenschaften eignet. Vielmehr gibt es einen ziemlich genau definierten Bereich, innerhalb dessen der Anteil des geregelten Polyamid 12-Pulvers liegen muss. Nach umfangreichen Versuchen wurde gefunden, dass sich verzugsarme Objekte mit hoher Reißdehung und guten Oberflächen nur herstellen lassen, wenn der Anteil des geregelten Polyamid 12 in der Mischung mit ungeregeltem Polyamid 12 zwischen 10 und 30 Gewichtsprozent, bevorzugt zwischen 10% und 23 %, beträgt. Die Art der Regelung in dem geregelten Polyamid 12 spielt dabei keine Rolle. Es wurde gefunden, dass es einzig darauf ankommt, dass der Anteil des Polyamids ohne Molmassenaufbau bei 10 bis 30% liegen muss.

Die Vorteilhaftigkeit der Verwendung solch einer Pulvermischung zeigt sich insbesondere dann, wenn das erfindungsgemäße Pulver als Altpulver erneut für einen Bauvorgang verwendet wird. Mit dem erfindungsgemäßen Pulver ist es insbesondere möglich, mit einem Neupulveranteil (=Auffrischrate) von lediglich zwischen 0,1% und 40%, vorzugsweise 30%, auszukommen und dennoch Bauteile zu erzeugen, deren mechanische Eigenschaften, deren Verzug und deren Oberflächenqualität in gleichem Maße zufriedenstellend sind.

Weitere Merkmale und Zweckmäßigkeiten der Erfindung ergeben sich aus der Beschreibung von Ausführungsbeispielen. Von den Figuren zeigen:
- Fig. 1: eine Darstellung der Lage von gebauten Teststrukuren im Bauraum einer verwendeten EOSINT P380-Anlage,
- Fig. 2: die Werte für Verzug und Reißdehnung, die an den Test- strukturen ermittelt wurden,
- Fig. 3: ein Diagramm, das die Ermittlung der Verzugswerte ver- anschaulicht, und
- Fig. 4: eine Lasersintervorrichtung nach dem Stand der Tech- nik.

Mittels eines Lasersinterverfahrens auf einer EOSINT P380-Anlage der Anmelderin wurden unterschiedliche Teststrukturen gebaut, anhand derer
- die Reißdehnung als wichtigste mechanische Eigenschaft,
- das Verzugsverhalten und
- die Oberflächenbeschaffenheit
ermittelt wurden, um die Vorteilhaftigkeit der erfindungsgemäßen Pulvermischung zu belegen.

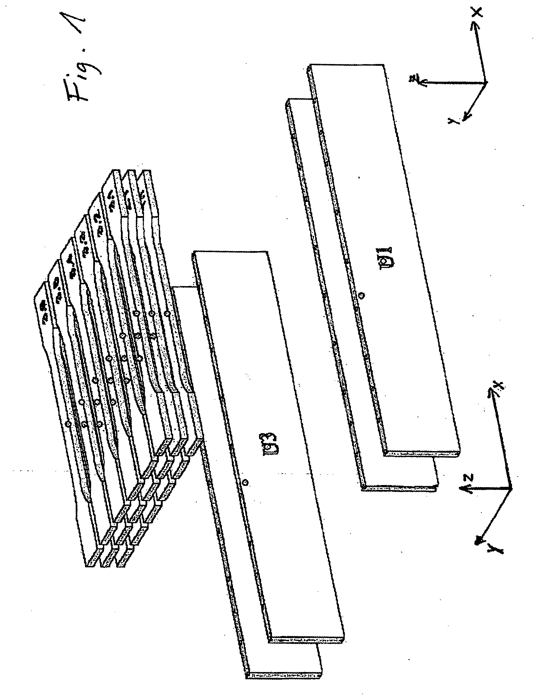

Fig. 1 zeigt die gebauten Teststrukturen nach Abschluss des Bauvorgangs, wobei das nicht verfestigte Pulver nicht dargestellt ist. Die Abbildung gibt also die Lage der Objekte im Bauraum wieder. Man erkennt vier Verzugsstäbe 1 mit den Abmessungen 250 mm x 42 mm x 6 mm und 18 xy-Zugstäbe 3 nach ISO 527-2. Die Reißdehnung in xy-Richtung wurde an den xy-Zugstäben 3 ermittelt. Das Verzugsverhalten und die Oberflächengüte wurden anhand der Verzugsstäbe 1 ermittelt.

Als Baumaterial wurden das Pulver PA 2200, das von der Anmelderin kommerziell vertrieben wird, das Pulver Vestosint 2157, das von der Firma Evonik kommerziell vertrieben wird, sowie Mischungen beider Pulver verwendet. Die Pulvermischungen wurden durch trockenes Vermischen der Ausgangspulver mit einem Betonmischer (dry blend) erhalten. Es wäre aber ebenso möglich, eine Mischung mittels gemeinsamen Auskristallierens in Ethanol nach dem in DE 290 66 47 B1 beschriebenen Verfahren zu erzeugen.

Das PA 2200-Pulver ist ein Polyamid 12-Pulver, bei dem keine besonderen Vorkehrungen getroffen wurden, um den Alterungsprozess während eines Bauvorgangs positiv zu beeinflussen. Dies führt dazu, dass bei diesem Pulver eine Erhöhung der Molmasse feststellbar ist, nachdem es in einem Lasersinterverfahren eingesetzt wurde.

Das Vestosint 2157-Pulver ist ebenfalls ein Polyamid 12-Pulver. Allerdings lässt sich bei diesem Pulver kein nennenswerter Anstieg der Molmasse feststellen, nachdem es in einem Bauvorgang in einer Lasersinteranlage verwendet wurde.

Um objektive Aussagen über das Alterungsverhalten der verwendeten Pulver zu erhalten, wurden beide Ausgangspulver in Reinform in einem Ofen unter Stickstoffatmosphäre 20 Stunden einer Temperatur ausgesetzt, die 10°C unterhalb der nach der Norm ISO 11357 bestimmten jeweiligen Schmelztemperatur lag. Die entsprechenden DSC-Messungen zur Bestimmung der Schmelztemperatur wurden auf einem Mettler Toledo DSC 823 durchgeführt. Dabei wurde, abweichend von der Norm, eine Temperaturrampe 0°C - 250°C - 0° durchfahren, wobei die Anfangs- und Endtemperatur (jeweils 0°C) drei Minuten gehalten wurde und auch die Verweildauer beim Maximalwert von 250°C drei Minuten betrug. Weiterhin betrug die Heiz- bzw. Kühlrate 20K/min und die Einwaage bei den Messungen 5 mg bis 5,5 mg.

Nach der Ofenbehandlung wurde für beide Pulver die Viskositätszahl nach ISO 307 ermittelt und mit der Viskositätszahl vor der Ofenbehandlung verglichen. Es zeigte sich, dass bei dem PA 2200-Pulver die Viskositätszahl nach ISO 307 von 120 ml/g auf 283 ml/g, also um 135,8 % anstieg, während bei dem Vestosint 2157-Pulver die Viskositätszahl nach ISO 307 von 109 ml/g auf 114 ml/g, also lediglich um 4,6 % anstieg.

Die Testobjekte wurden mit Pulvermischungen gebaut, bei denen der Anteil des Vestosint 2157-Pulvers in der Mischung mit dem PA 2200-Pulver bei 0%, 10%, 15%, 23%, 30% und 100% lag, wobei man streng genommen für 0% und 100% nicht mehr von einer Mischung reden kann. Auch für die Pulvermischungen wurde der Anstieg der Viskositätszahl nach 20-stündiger Ofenbehandlung wie oben beschrieben ermittelt. Die Viskositätszahl nach der Ofenbehandlung lag für die Mischungen zwischen 235 und 270 ml/g. Speziell wurde für einen 10%-igen Vestosint-Anteil ein Anstieg von 119 ml/g auf 270 ml/g beobachtet und für einen 30%-igen Vestosint-Anteil ein Anstieg von 117 ml/g auf 246 ml/g beobachtet.

Damit die Ergebnisse miteinander vergleichbar waren, wurden sämtliche Bauvorgänge unter exakt gleichen Bedingungen durchgeführt. Die Bautemperatur, also die Temperatur des Pulvers unmittelbar vor dem Auftreffen der Laserstrahlung, betrug 179°C. Vor dem Start eines Bauvorgangs wurde das Pulver zwei Stunden lang in der Baukammer vorgeheizt unter Verwendung der Einstellung "automatische Aufheizung" an der EOSINT P380-Anlage (Software-Version PSW 3.2). Beim Verfestigen des Pulvers wurde der Belichtungsparameter "Mechanic" an der EOSINT P380-Anlage gewählt (Software-Version PSW 3.2).

Wie man gut anhand der Figur 1 erkennen kann, wurde das Material erst ab einer gewissen Höhe oberhalb der Bauplattform verfestigt. Insbesondere betrug die Höhe des Schichtstapels an unverfestigten Pulverschichten, die unmittelbar auf der Bauplattform lagerten, 6 mm. Nachdem der Bauvorgang abgeschlossen war, betrug der Abstand der obersten Pulverschicht von der Bauplattform ca. 155 mm.

Für jede Pulvermischung wurde ein Bauvorgang durchgeführt, bei dem Pulvermaterial verwendet wurde, welches noch nie zuvor in einem derartigen Herstellungsverfahren verwendet worden war, das also noch keiner Temperaturbelastung ausgesetzt war. An den in diesem Bauvorgang erhaltenen xy-Zugstäben 3 wurde die Reißdehnung nach ISO 527-2 bestimmt.

In einem weiteren Bauvorgang für jede Pulvermischung wurde Pulver verwendet, das aus 70% Altpulver und 30% frischem Pulver bestand, wobei als Altpulver unverbrauchtes Material aus dem zuvor durchgeführten Bauvorgang verwendet wurde. Anhand der Verzugsstäbe 1, die bei diesem zweiten Bauvorgang erhalten wurden, wurden die Oberflächenqualität und das Verzugsverhalten gemessen, da beide Eigenschaften gerade bei der Verwendung von aufgefrischtem Pulver (also Baumaterial mit Altpulveranteil) schlechtere Werte zeigen.

In der Tabelle 1 sind die Messwerte für die Reißdehnung, den Verzug und die Einfallstellen aufgelistet.

**Tabelle 1**

| Anteil Vestosint 2157 [%] | **100** | **30** | **23** | **15** | **10** | **0** |
|---|---|---|---|---|---|---|
| Reißdehnung in xy-Richtung [%] | 4,36 | 14,74 | 18,38 | 18,89 | 20,31 | 19,82 |
| Verzug [mm⁻¹] | -0,0263 | -0,0394 | -0,0243 | -0,0952 | -0,0991 | -0,1451 |
| Einfallstellen bei 30% Auffrischrate | nein | nein | nein | nein | leicht | deutlich |

Die Reißdehnung wurde nach ISO 527-2 bestimmt, wobei der angegebene Prozentwert die prozentuale Verlängerung eines Zugstabs nach dem Bruch ist, die Messunsicherheit lag unter 5%.

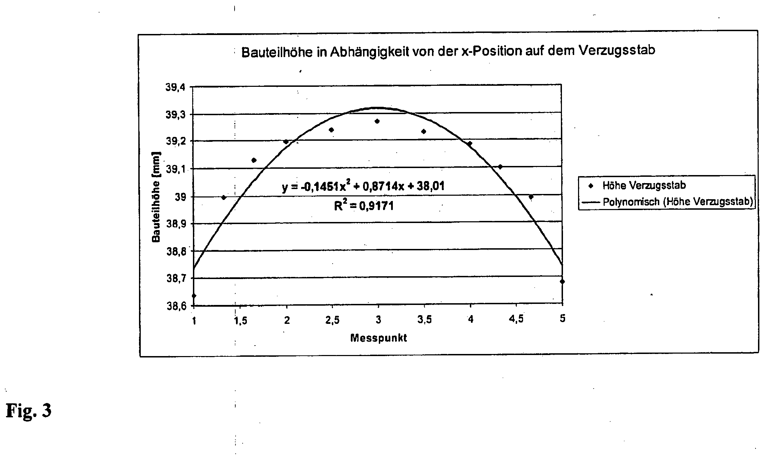

Zur Bestimmung des Verzugs wurde an 11.Messpunkten die Breite (in Fig. 1 in der z-Richtung) der Verzugsstäbe 1 bestimmt. In der Fig. 3 ist beispielhaft für reines PA 2200-Pulver die Breite eines Verzugsstabes in Abhängigkeit von der Messposition entlang der Länge des Verzugsstabes (in Fig. 1 in der x-Richtung) dargestellt. Die Messpunkte ganz links und ganz rechts in der Figur entsprechen dabei dem Verzug an den Enden des Verzugsstabs 1. Es zeigte sich für jeden Verzugsstab ein parabelförmiger Verlauf, aus dem hervorgeht, dass an den Rändern des Verzugsstabes die Bauteilbreite abnimmt. Dieses Abnehmen der Bauteilbreite resultiert daraus, dass während des Bauvorgangs sich die Enden der Verzugsstäbe geringfügig nach oben wölbten, was dazu führte, dass an den Stabenden weniger Baumaterial beim Schichtauftrag aufgebracht wurde und entsprechend weniger Baumaterial verfestigt wurde, so dass im Endeffekt die geringere Breite der Verzugsstäbe an diesen Stellen resultierte.

Zur Mittelung der Ergebnisse wurde für jeden der vier Verzugsstäbe eine Parabel an die Messwerte angepasst und anschließend der Mittelwert dieser vier einzelnen Fits berechnet. In der Tabelle 2 ist als Ergebnis dieser Mittelwertbildung der gemittelte Vorfaktor des quadratischen Terms angegeben. Da die Krümmung der Parabel davon abhängt, wie sich die Breite entlang der Verzugsstäbe ändert, ist der angegebene Wert in Tabelle 1 ein gutes Maß für das Ausmaß des Verzugs.

Bezüglich der Einfallstellen ist es sehr schwer, ein normiertes Messverfahren anzuwenden. Rauhigkeitsmessungen können nur sehr unvollkommen die Einwölbungen der Oberfläche (Orangenhaut bzw. "orange peel") wiedergeben. Aus diesem Grunde wurde das Ausmaß der Einfallstellen subjektiv beurteilt mit den drei Angaben: "keine Einfallstellen", "leichte Einfallstellen" und "deutliche Einfallstellen".

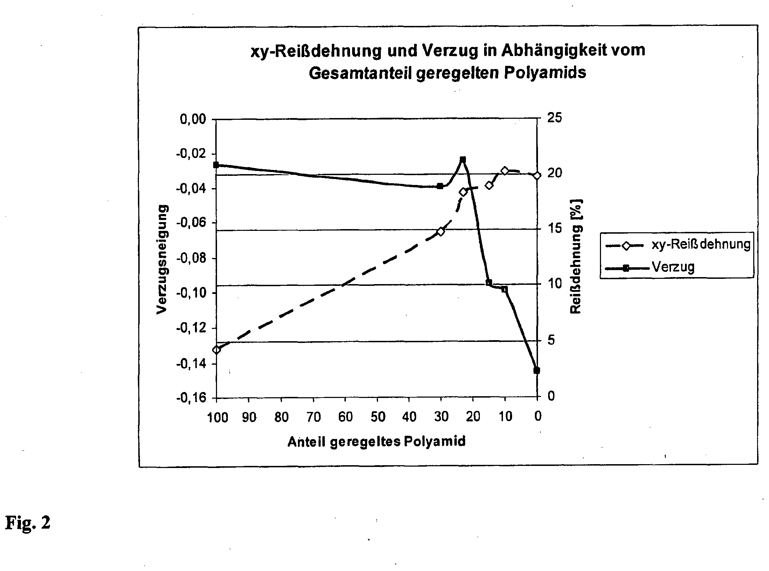

Zur besseren Veranschaulichung der erhaltenen Ergebnisse sind in Fig. 2 die ermittelten Verzugswerte und Reißdehnungswerte gegen den Anteil des Vestosint 2157-Pulvers an der Pulvermischung aufgetragen. Wünschenswert sind dabei geringe Beträge für den auftretenden Verzug und möglichst hohe Werte für die Reißdehnung.

Wie man anhand der beiden linken Messpunkte in Figur 2 sieht, ist die Reißdehnung für einen hundertprozentigen Anteil an Vestosint 2157 sehr gering. Bei den beiden Messpunkte ganz rechts in der Figur 2 ist der Verzug bei der Verwendung von 100% PA 2200-Pulver sehr groß. Es zeigt sich weiterhin, das das Verhalten der Pulvermischungen in Abhängigkeit vom Anteil an Vestosint 2157 nicht linear ist: Der Bereich, innerhalb dessen sowohl der Verzug als auch die Reißdehnung zufriedenstellende Werte zeigen, liegt bei einem Vestosint-Anteil zwischen 10 und 30%. Der Fachmann wird innerhalb dieses Bereichs den genauen Prozentsatz an Vestosint-Material in Abhängigkeit davon wählen, ob er das Hauptaugenmerk auf eine hohe Reißdehnung, ein geringes Verzugsverhalten oder eine niedrige Auffrischrate (niedriger Anteil an hinzuzufügendem Neupulver bei Wiederverwendung des Pulvers) legt.

Speziell zur Erzielung einer hohen Reißdehnung sollte der Vestosint-Anteil zwischen 10 und 23% liegen. Wie die Tabelle 1 zeigt, treten dabei aber unterhalb eines Prozentanteils von 15% bereits leicht verschlechterte Oberflächen (vermehrte Einfallstellen) auf. Des Weiteren fällt auf, dass insbesondere bei einem Anteil von 23% ein besonders geringer Verzug vorliegt und die Reißdehnung für höhere Prozentsätze rasch abnimmt. Möchte man Einfallsstellen weitestgehend vermeiden, so ist die Wahl eines Anteils des Vestosint-Pulvers zwischen 12% und 23% angezeigt. Soll dabei auch noch der Verzug gering sein, so bietet sich die Wahl eines Anteils zwischen 15% und 23% an.

Wie bereits in DE 103 30 590 A1 betont wird, hängen die erhaltenen Bauteileigenschaften stark von den Alterungseigenschaften des verwendeten PA12-Pulvers ab. Eine zentrale Rolle spielt dabei die während der Alterung auftretende Nachkondensation, die mittels einer Änderung der Viskositätszahl mit zunehmender Alterung erfasst werden kann.

Gemäß DE 103 30 590 A1 können PA12-Pulver, bei denen die Viskositätszahl nicht infolge der Alterung ansteigt, aus sogenannten geregelten Polyamiden bestehen. Dies sind Polyamide, bei denen eine Endgruppenstabilisierung durchgeführt wurde, also z.B. die Anzahl der Carboxylendgruppen und Aminoendgruppen ungleich gemacht wurde. Während dabei in DE 103 30 590 A1 lediglich Pulver mit einem Carboxyl-Endgruppenüberschuss und einem Aminoendgruppengehalt von unter 40 mmol/kg experimentell charakterisiert wurden, ist es in gleicher Weise möglich, für einen Amino-Endgruppenüberschuss zu sorgen, um eine Nachkondensation und damit eine Zunahme der Lösungsviskosität bei Alterung zu verhindern. Beispielsweise könnte ein Diamin als Regler verwendet werden, der zu einer Reduktion der Anzahl der freien Säuregruppen führt.

Letztendlich kommt es nur darauf an, ob ein Teil der Pulvermischung bei Alterung einen Molmassenaufbau zeigt oder nicht. Die Erfindung ist daher nicht auf Mischungen aus geregelten und ungeregelten PA 12-Pulvern beschränkt, sondern umfasst generell Mischungen eines PA12-Pulver mit Molmassenaufbau bei Alterung mit einem PA 12-Pulver ohne Molmassenaufbau bei Alterung.

Entsprechend ergeben sich die erfindungsgemäßen Vorteile auch bei Verwendung anderer PA12-Pulver als Vestosint 2157, bei denen ebenfalls kein Molmassenaufbau mit zunehmender Alterung stattfindet. Da es nur darauf ankommt, ob ein Teil der Pulvermischung bei Alterung einen Molmassenaufbau zeigt oder nicht, ist die Erfindung ferner nicht auf Mischungen aus geregelten und ungeregelten PA 12-Pulvern beschränkt, sondern umfasst generell Mischungen eines PA12-Pulver mit Molmassenaufbau bei Alterung mit einem PA 12-Pulver ohne Molmassenaufbau bei Alterung. Die Rekristallisationstemperatur für das alterungsstabilisierte Polyamid 12-Pulver ohne Molmassenaufbau sollte dabei bevorzugt zwischen 140°C und 150°C und noch bevorzugter zwischen 143°C und 148°C liegen. Zur Beurteilung des Alterungsverhaltens kann die weiter oben beschriebene 20-stündige Ofenbehandlung und die in Anlehnung an ISO 307 durchgeführte Ermittlung des Viskositätszahlanstiegs dienen. Als PA12-Pulver ohne Molmassenaufbau werden hier Pulver angesehen, bei denen die Viskositätszahl um weniger als 10% ansteigt. Als PA12-Pulver mit Molmassenafubau werden hier Pulver angesehen, bei denen die Viskositätszahl um mehr als 15% ansteigt.

Die erfindungsgemäßen Pulvermischungen sind nicht nur in einem Lasersinterverfahren einsetzbar, sondern allgemein in Verfahren zur schichtweisen Herstellung von Objekten, bei denen eine Pulververfestigung durch Zuführen von Energie mittels elektromagnetischer Strahlung oder Teilchenstrahlung erfolgt. Beispielsweise ist auch ein Einsatz in einem Maskensinterverfahren möglich, in dem eine Pulverschicht durch eine Maske belichtet wird.

Die Randbedingung für PA 12-Pulvermischungen, die sich erfindungsgemäß besonders zum Herstellen eines dreidimensionalen Objekts durch schichtweises Verfestigen an den dem Objekt entsprechenden Stellen in jeder Schicht mittels Einwirkung von elektromagnetischer oder Partikelstrahlung eignen, ist des Weiteren durch die generelle Verarbeitbarkeit in solch einem Verfahren gegeben:

Es hat sich gezeigt, dass für eine generelle Eignung als Baumaterial in den genannten Verfahren die Viskositätszahl, bestimmt nach ISO 307, zwischen 80 ml/g und 240 ml/g liegen sollte, und bevorzugt zwischen 100 ml/g und 140 ml/g. Die Schmelztemperatur, bestimmt in Anlehnung an ISO 11357, wie oben beschrieben, sollte zwischen 181°C und 189°C, bevorzugt zwischen 183°C und 188°C, liegen und die Schmelzenthalpie, in gleicher Weise bestimmt, sollte bei 112 kJ/kg ± 17 kJ/kg liegen. Weiterhin sollte die Rekristallisationstemperatur für das Polyamid 12-Pulver ohne Molmassenaufbau zwischen 140°C und 150°C liegen und die Rekristallisationstemperatur für das Polyamid 12-Pulver mit Molmassenaufbau zwischen 130°C und 145°C liegen, falls die Rekristallisationstemperatur wiederum wie oben beschrieben in Anlehnung an ISO 11357 bestimmt wird. Die für die Verwendung in einem Schichtbauverfahren, insbesondere einem Lasersinterverfahren, zu wählenden Korngrößenverteilungen sollten dabei dergestalt sein, dass in der Mischung der D_{0,5}-Wert zwischen 10µm und 150 µm, bevorzugt zwischen 20µm und 80 µm, noch bevorzugter zwischen 40µm und 65 µm und nochmals bevorzugter zwischen 50µm und 65 µm liegt. Bei einer besonders bevorzugten Korngrößenverteilung ist der D_{0,9}-Wert kleiner 95µm, der D_{0,1}-Wert größer 30µm und der D_{0,5}-Wert zwischen 40µm und 65µm.

Natürlich bleiben die Vorteile der erfindungsgemäßen Pulvermischungen auch dann bestehen, wenn noch weitere Additive, wie z.B. Füllstoffe, Farbstoffe, etc., den Pulvermischungen hinzugefügt werden. Bei Füllstoffen ist hierbei in erster Linie an Glaspartikel, Alugrieß oder Carbonfasern zu denken.

Schließlich sei nochmals betont, dass mit den erfindungsgemäßen Pulvermischungen Bauteile mit geringem Verzug gefertigt werden können, selbst wenn der Altpulver-Anteil 60% übersteigt. Im Vergleich zum Stand der Technik ist damit eine deutliche Herabsetzung des Neupulveranteils auf 30% oder 20% oder 10% möglich. Im Idealfall kann der Neupulveranteil fast vollständig vermieden werden, also sogar bei lediglich 0,1 % liegen.

## Patentansprüche

1. Pulvermischung geeignet zum Herstellen eines dreidimensionalen Objekts (3) durch schichtweises Verfestigen eines pulverförmigen Aufbaumaterials (19) an den dem Objekt (3) entsprechenden Stellen in jeder Schicht mittels Einwirkung von elektromagnetischer Strahlung (18) oder Partikelstrahlung,
wobei die Pulvermischung aus einer Mischung aus einem ersten Polyamid 12-Pulver und einem zweiten Polyamid 12-Pulver besteht,
wobei das erste Polyamid 12-Pulver einen Anstieg der Viskositätszahl nach ISO 307 um weniger als 10% aufweist, wenn es unter Stickstoffatmosphäre für 20 Stunden einer Temperatur ausgesetzt wird, die 10°C unterhalb seiner Schmelztemperatur liegt und das erste Polyamid 12-Pulver ein endgruppenstabilisiertes Polyamid 12-Pulver ist,
wobei das zweite Polyamid 12-Pulver einen Anstieg der Viskositätszahl nach ISO 307 von 15% oder mehr aufweist, wenn es unter Stickstoffatmosphäre für 20 Stunden einer Temperatur ausgesetzt wird, die 10°C unterhalb seiner Schmelztemperatur liegt und das zweite Polyamid 12-Pulver ein nicht endgruppenstabilisiertes Polyamid 12-Pulver,
**dadurch gekennzeichnet, dass** der Anteil des ersten Polyamid 12-Pulvers in der Mischung mit dem zweiten Polyamid 12-Pulver zwischen 12 und 30 Gewichtsprozent beträgt.

2. Pulvermischung nach Anspruch 1,
bei der sowohl das erste Polyamid 12-Pulver als auch das zweite Polyamid 12-Pulver, bevor diese einer Temperaturbelastung ausgesetzt werden, aufweisen:
eine Viskositätszahl, bestimmt nach ISO 307, die zwischen 80 ml/g und 240 ml/g liegt,
eine Schmelztemperatur die zwischen 181°C und 189°C liegt, und
eine Schmelzenthalpie von 112 kJ/kg ± 17 kJ/kg,
wobei die Rekristallisationstemperatur für das erste Polyamid 12-Pulver zwischen 140°C und 150°C liegt und
die Rekristallisationstemperatur für das zweite Polyamid 12-Pulver zwischen 130°C und 145°C liegt.

3. Pulvermischung nach Anspruch 2, bei der die Viskositätszahl, bestimmt nach ISO 307, zwischen 100 ml/g und 140 ml/g liegt.

4. Pulvermischung nach einem der Ansprüche 1 bis 3, bei der der Anteil des ersten Polyamid 12-Pulvers in der Mischung mit dem zweiten Polyamid 12-Pulver zwischen 12 und 23 Gewichtsprozent beträgt.

5. Pulvermischung nach einem der Ansprüche 1 bis 4, wobei die Pulvermischung einen D_{0,5}-Wert zwischen 10µm und 150 µm aufweist.

6. Pulvermischung nach einem der Ansprüche 1 bis 5, wobei die Pulvermischung einen D_{0,5}-Wert zwischen 20µm und 80 µm aufweist.

7. Pulvermischung nach Anspruch 6, wobei die Pulvermischung einen D_{0,9}-Wert kleiner 95µm, einen D_{0,1}-Wert größer 30µm und einen D_{0,5}-Wert zwischen 40µm und 65 µm aufweist.

8. Pulvermischung nach Anspruch 6 oder 7, wobei die Pulvermischung einen D_{0,5}-Wert zwischen 50µm und 65 µm aufweist.

9. Pulvermischung nach einem der Ansprüche 1 bis 8, die mindestens einen zusätzlichen Hilfsstoff und/oder mindestens einen zusätzlichen Füllstoff aufweist.

10. Pulvermischung nach Anspruch 9, die als Füllstoff Glaspartikel, Alugrieß oder Carbonfasern aufweist.

11. Verfahren zum Herstellen eines dreidimensionalen Objekts durch schichtweises Verfestigen eines pulverförmigen Aufbaumaterials an den dem Objekt entsprechenden Stellen in jeder Schicht mittels Einwirkung von elektromagnetischer oder Partikelstrahlung,
**dadurch gekennzeichnet, dass** als Aufbaumaterial eine Pulvermischung gemäß einem der Ansprüche 1 bis 10 verwendet wird.

12. Verfahren gemäß Anspruch 11, bei dem ein Anteil des Aufbaumaterials, der zwischen 0,1 % und 40 % beträgt, eine Pulvermischung ist, die noch nie zuvor in einem derartigen Herstellungsverfahren verwendet wurde, und der Rest des Aufbaumaterials eine Pulvermischung ist, die bereits zuvor in einem entsprechenden Herstellungsverfahren verwendet wurde.

13. Verwendung einer Pulvermischung gemäß einem der Ansprüche 1 bis 10 zur schichtweisen Herstellung eines dreidimensionalen Objekts durch Sinterung mittels selektiver elektromagnetischer Strahlung oder Teilchenstrahlung.

14. Dreidimensionales Objekt, welches durch Sintern mittels selektiver elektromagnetischer Strahlung oder Teilchenstrahlung schichtweise hergestellt wurde,
**dadurch gekennzeichnet, dass** das Objekt aus einer Pulvermischung gemäß einem der Ansprüche 1 bis 10 hergestellt ist.

## Claims

1. Powder mixture suitable for producing a three-dimensional object (3) via layer-by-layer solidification of a pulverulent construction material (19) at the sites corresponding to the object (3) in each layer by means of exposure to electromagnetic radiation (18) or particle beams,
where the powder mixture is composed of a mixture of a first nylon-12 powder and of a second nylon-12 powder, where the viscosity number in accordance with ISO 307 of the first nylon-12 powder rises by less than 10% when it is exposed for 20 hours, under nitrogen, to a temperature which is 10°C below its melting point and the first nylon-12 powder is an end-group-stabilized nylon-12 powder,
where the viscosity number in accordance with ISO 307 of the second nylon-12 powder rises by 15% or more when it is exposed for 20 hours, under nitrogen, to a temperature which is 10°C below its melting point and the second nylon-12 powder is a nylon-12 powder which has not been endgroup stabilized,
**characterized in that** the proportion of the first nylon-12 powder in the mixture with the second nylon-12 powder is from 12 to 30 percent by weight.

2. Powder mixture according to Claim 1,
in which both the first nylon-12 powder and the second nylon-12 powder, before these are exposed to increased temperature, have:
a viscosity number, determined in accordance with ISO 307, which is from 80 ml/g to 240 ml/g,
a melting point which is from 181°C to 189°C, and
an enthalpy of fusion of 112 kJ/kg ± 17 kJ/kg,
where the recrystallization temperature for the first nylon-12 powder is from 140°C to 150°C and
the recrystallization temperature for the second nylon-12 powder is from 130°C to 145°C.

3. Powder mixture according to Claim 2, in which the viscosity number, determined in accordance with ISO 307, is from 100 ml/g to 140 ml/g.

4. Powder mixture according to any of Claims 1 to 3, in which the proportion of the first nylon-12 powder in the mixture with the second nylon-12 powder is from 12 to 23 percent by weight.

5. Powder mixture according to any of Claims 1 to 4, where the D_{0.5} value of the powder mixture is from 10 µm to 150 µm.

6. Powder mixture according to any of Claims 1 to 5, where the D_{0.5} value of the powder mixture is from 20 µm to 80 µm.

7. Powder mixture according to Claim 6, where the D_{0.9} value of the powder mixture is smaller than 95 µm, the D_{0.1} value of the powder mixture is greater than 30 µm and the D_{0.5} value of the powder mixture is from 40 µm to 65 µm.

8. Powder mixture according to Claim 6 or 7, where the D_{0.5} value of the powder mixture is from 50 µm to 65 µm.

9. Powder mixture according to any of Claims 1 to 8, which comprises at least one additional auxiliary and/or at least one additional filler.

10. Powder mixture according to Claim 9, which comprises, as filler, glass particles, aluminium granules or carbon fibres.

11. Process for producing a three-dimensional object via layer-by-layer solidification of a pulverulent construction material at sites corresponding to the object in each layer by means of exposure to electromagnetic radiation or to particle beams, **characterized in that** a powder mixture according to any of Claims 1 to 10 is used as construction material.

12. Process according to Claim 11, in which a proportion of the construction material which is from 0.1% to 40% is a powder mixture which has never previously been used in a production process of this type, and the balance of the construction material is a powder mixture which has already been used previously in a corresponding production process.

13. Use of a powder mixture according to any of Claims 1 to 10 for the layer-by-layer production of a three-dimensional object via sintering by means of selective electromagnetic radiation or particle beams.

14. Three-dimensional object which has been produced layer-by-layer via sintering by means of selected electromagnetic radiation or particle beams, **characterized in that** the object has been produced from a powder mixture according to any of Claims 1 to 10.

## Revendications

1. Mélange de poudres approprié pour la fabrication d'un objet tridimensionnel (3) par solidification en couches d'un matériau de construction en poudre (19) aux emplacements correspondant à l'objet (3) dans chaque couche sous l'effet d'un rayonnement électromagnétique (18) ou d'un rayonnement de particules,
le mélange de poudre étant constitue d'un mélange d'une première poudre de polyamide 12 et d'une seconde poudre de polyamide 12,
la première poudre de polyamide 12 présentant une augmentation de l'indice de viscosité selon ISO 307 de moins de 10 % lorsqu'elle est exposée sous atmosphère d'azote pendant 20 heures à une température qui est inférieure de 10 °C à sa température de fusion, la première poudre de polyamide 12 étant une poudre de polyamide 12 stabilisée par des groupes terminaux,
la seconde poudre de polyamide 12 présentant une augmentation de l'indice de viscosité selon ISO 307 de 15 % ou plus lorsqu'elle est expose sous atmosphère d'azote pendant 20 heures à une température qui est inférieure de 10 °C à sa température de fusion, la seconde poudre de polyamide 12 étant une poudre de polyamide 12 non stabilisée par des groupes terminaux,
**caractérise en ce que** la proportion de la première poudre de polyamide 12 dans le mélange avec la seconde poudre de polyamide 12 est comprise entre 12 et 30 pourcent en poids.

2. Mélange de poudres selon la revendication 1, dans lequel aussi bien la première poudre de polyamide 12 que la seconde poudre de polyamide 12 présentent, avant que celles-ci ne soient exposées à une sollicitation de température:
un indice de viscosité déterminé selon ISO 307, compris entre 80 ml/g et 240 ml/g,
une température de fusion comprise entre 181 °C et 189 °C, et
une enthalpie de fusion de 112 kJ/kg ± 17 kJ/kg,
dans lequel la température de recristallisation pour la première poudre de polyamide 12 est comprise entre 140 °C et 150 °C, et
la température de recristallisation pour la seconde poudre de polyamide 12 est comprise entre 130 °C et 145 °C.

3. Mélange de poudres selon la revendication 2, dans lequel l'indice de viscosité, déterminé selon ISO 307, est compris entre 100 ml/g et 140 ml/g.

4. Mélange de poudres selon l'une quelconque des revendications 1 à 3, dans lequel la proportion de la première poudre de polyamide 12 dans le mélange avec la seconde poudre de polyamide 12 est comprise entre 12 et 23 pourcent en poids.

5. Mélange de poudres selon l'une quelconque des revendications 1 à 4, dans lequel le mélange de poudres présente une valeur D_{0,5} comprise entre 10 µm et 150 µm.

6. Mélange de poudres selon l'une quelconque des revendications 1 à 5, dans lequel le mélange de poudres présente une valeur D_{0,5} comprise entre 20 µm et 80 µm.

7. Mélange de poudres selon la revendication 6, dans lequel le mélange de poudres présente une valeur D_{0,9} inférieure à 95 µm, une valeur D_{0,1} supérieure à 30 µm et une valeur D_{0,5} comprise entre 40 µm et 65 µm.

8. Mélange de poudres selon la revendication 6 ou 7, dans lequel le mélange de poudres présente une valeur D_{0,5} comprise entre 50 µm et 65 µm.

9. Mélange de poudres selon l'une quelconque des revendications 1 à 8, qui comprend au moins un adjuvant supplémentaire et/ou au moins une charge supplémentaire.

10. Mélange de poudres selon la revendication 9, qui comprend en tant que charge des particules de verre, de la poudre d'aluminium ou des fibres de carbone.

11. Procédé de fabrication d'un objet tridimensionnel par solidification en couches d'un matériau de construction en poudre aux emplacements correspondant à l'objet dans chaque couche sous l'effet d'un rayonnement électromagnétique ou de particules,
**caractérisé en ce qu'**un mélange de poudres selon l'une quelconque des revendications 1 à 10 est utilisé en tant que matériau de construction.

12. Procédé selon la revendication 11, dans lequel
une proportion du matériau de construction comprise entre 0,1 % et 40 % est un mélange de poudres qui n'a encore jamais été utilisé auparavant dans un tel procédé de fabrication, et
le reste du matériau de construction est un mélange de poudres qui a déjà été utilisé auparavant dans un procédé de fabrication correspondent.

13. Utilisation d'un mélange de poudres selon l'une quelconque des revendications 1 à 10 pour la fabrication en couches d'un objet tridimensionnel par frittage par rayonnement électromagnétique ou rayonnement de particules sélectif.

14. Objet tridimensionnel, qui a été fabriqué en couches par frittage par rayonnement électromagnétique ou rayonnement de particules sélectif,
**caractérisé en ce que** l'objet est fabrique à partir d'un mélange de poudres selon l'une quelconque des revendications 1 à 10.
